# EUROPÄISCHE PATENTANMELDUNG

(11) **EP 4 050 695 A1**
(43) Veröffentlichungstag der Anmeldung: **31.08.2022**
(21) Anmeldenummer: 21159596.2
(22) Anmeldetag: 26.02.2021
(51) Int. Cl.: H01M 10/42, H01M 4/139, G01N 21/31, G01J 3/00, G01N 21/84, G01N 21/88, G01N 21/89

(54) **VERFAHREN ZUR ANALYSE EINER ELEKTRODENSCHICHT EINES BATTERIESPEICHERS UND HERSTELLUNGSVERFAHREN EINES BATTERIESPEICHERS, HERSTELLUNGSEINHEIT**

(71) Anmelder: Siemens Aktiengesellschaft, 80333 München (DE)
(72) Erfinder: Schulte, Sascha, 91315 Höchstadt (DE); Gigler, Alexander Michael, 86836 Untermeitingen (DE); Arzberger, Arno, 96135 Stegaurach (DE); Baldauf, Manfred, 91056 Erlangen (DE); Steinbacher, Frank, 90542 Eckental (DE)

(57) **Zusammenfassung**

Die Erfindung betrifft ein Verfahren zur Analyse einer Elektrodenschicht eines Batteriespeichers, ein Herstellungsverfahren eines Batteriespeichers, eine Herstellungseinheit und ein Computerprogrammprodukt. Das Verfahren zur Analyse einer

Elektrodenschicht für einen Batteriespeicher in einer Elektrodenschichtherstellungseinrichtung umfasst mehrere Schritte. Zunächst erfolgt das Bereitstellen einer Hyperspektralkamera, welche Bildpunkte aufnimmt. Anschließend wird ein Bild mit wenigstens zwei Bildpunkten der Elektrodenschicht aufgenommen, wobei ein erster Bildpunkt einen ersten Ort der Elektrodenschicht und ein zweiter Bildpunkt einen zweiten Ort der Elektrodenschicht abbildet, wobei der erste Ort und der zweite Ort benachbart angeordnet sind. Anschließend wird eine erste Materialeigenschaft der Elektrodenschicht an dem ersten Ort basierend auf dem ersten Bildpunkt bestimmt und eine zweite Materialeigenschaft der Elektrodenschicht an dem zweiten Ort basierend auf dem zweiten Bildpunkt in einer Recheneinheit bestimmt. Die Materialeigenschaft an dem ersten Ort und dem zweiten Ort wird verglichen und ein Vergleichswert wird ermittelt. Basierend auf dem Vergleichswert wird eine charakteristische Eigenschaft der Elektrodenschicht ermittelt. Das Herstellungsverfahren eines Batteriespeichers umfasst das beschriebene Verfahren zur Analyse der Elektrodenschicht. Anschließend erfolgt ein Anpassen wenigstens einer Herstellungsbedingung zum Herstellen der Elektrodenschicht basierend auf wenigstens zwei charakteristischen Eigenschaften und/oder wenigstens zwei Qualitätswerten in wenigstens zwei unterschiedlichen Qualitätsklassen.

## Beschreibung

Die Erfindung betrifft ein Verfahren zur Analyse einer Elektrodenschicht eines Batteriespeichers, ein Herstellungsverfahren eines Batteriespeichers, eine Herstellungseinheit und ein Computerprogrammprodukt.

Lithium-Ionen-Akkumulatoren, im Folgenden auch Lithium-Ionen-Batterien genannt, werden aufgrund ihrer hohen Leistungsdichte und Energiedichte in mobilen und stationären Anwendungen als Energiespeicher eingesetzt.

Eine Lithium-Ionen-Batterie umfasst typischerweise mehrere Batteriezellen. Eine Batteriezelle, insbesondere eine Lithium-Ionen-Batteriezelle, umfasst eine Vielzahl von Schichten. Typischerweise umfassen diese Schichten Anoden, Kathoden, Separatoren und weitere Elemente. Diese Schichten können als Stapel oder als Wicklungen ausgestaltet sein.

Die Elektroden umfassen üblicherweise Metallfolien, insbesondere umfassend Kupfer und/oder Aluminium, welche mit einem Aktivmaterial beschichtet werden. Als Aktivmaterial wird dabei typischerweise eine lithiumhaltige Paste, Slurry genannt, aufgetragen. Die Folien und die Beschichtung weisen jeweils eine Dicke von einigen Mikrometern auf. Dadurch haben bereits einige Mikrometer Abweichung der Dicke der Beschichtung oder bei der Materialeigenschaft, insbesondere der Materialzusammensetzung, negative Auswirkungen auf die Qualität der Elektrode. Nachteilig werden bei unregelmäßiger Beschichtung somit qualitativ minderwertige Batteriezelle hergestellt. Weiterhin ist ein sicheres Betreiben der Batteriezelle nachteilig nicht sichergestellt.

Derzeit können im Stand der Technik fehlerhafte Beschichtungen häufig erst nach Abschluss des gesamten Produktionsprozesses der Batteriezelle im Rahmen eines sogenannten End- ofline-Tests durchgeführt werden. Teilweise werden fehlerhafte Beschichtungen auch erst nach mehreren Jahren der Batteriezelle im Betrieb festgestellt.

Nachteilig wird somit ein großer Anteil Ausschuss während der Batterieproduktion erzeugt. Somit weist der Produktionsprozess einen großen Materialbedarf und Energiebedarf auf, um eine ausreichende Menge qualitativ hochwertiger Batteriezellen zu produzieren.

Es ist somit Aufgabe der vorliegenden Erfindung, ein Verfahren zur Analyse der Elektrodenschicht, ein Herstellungsverfahren eines Batteriespeichers, eine Herstellungseinheit und ein Computerprogrammprodukt bereitzustellen, welche eine Ausschussquote der Batterieherstellung reduzieren.

Die Aufgabe wird erfindungsgemäß mit einem Verfahren gemäß Anspruch 1, einem Herstellungsverfahren gemäß Anspruch 10, einer Herstellungseinheit gemäß Anspruch 13 und einem Computerprogrammprodukt gemäß Anspruch 14 gelöst.

Das erfindungsgemäße Verfahren zur Analyse einer Elektrodenschicht eines Batteriespeichers in einer Elektrodenschichtherstellungseinrichtung umfasst mehrere Schritte. Zunächst wird eine Hyperspektralkamera bereitgestellt. Die Hyperspektralkamera nimmt Bildpunkte auf. Die Hyperspektralkamera nimmt ein Bild mit wenigstens zwei Bildpunkten der Elektrodenschicht auf. Ein erster Bildpunkt bildet einen ersten Ort der Elektrodenschicht ab und ein zweiter Bildpunkt bildet einen zweiten Ort der Elektrodenschicht ab. Der erste Ort und der zweite Ort sind benachbart zueinander angeordnet. Basierend auf dem ersten Bildpunkt wird an dem ersten Ort eine erste Materialeigenschaft der Elektrodenschicht bestimmt. Basierend auf dem zweiten Bildpunkt wird an dem zweiten Ort eine zweite Materialeigenschaft der Elektrodenschicht bestimmt beide Bestimmungen erfolgen in einer Recheneinheit. Anschließend erfolgt das Vergleichen der Materialeigenschaft an dem ersten Ort und dem zweiten Ort. Basierend auf dem Vergleich wird ein Vergleichswert ermittelt. Basierend auf dem Vergleichswert wird dann eine charakteristische Eigenschaft der Elektrodenschicht ermittelt.

Das erfindungsgemäße Herstellungsverfahren eines Batteriespeichers umfasst mehrere Schritte. Es erfolgt das Analysieren einer Elektrodenschicht für den Batteriespeicher gemäß dem erfindungsgemäßen Verfahren. Anschließend erfolgt das Anpassen wenigstens einer Herstellungsbedingung zum Herstellen der Elektrodenschicht basierend auf wenigstens einer charakteristischen Eigenschaft und/oder wenigstens einem Qualitätswert.

Eine erfindungsgemäße Herstellungseinheit zum Herstellen eines Batteriespeichers umfasst eine Elektrodenschichtherstellungseinrichtung mit einer Hyperspektralkamera und einer Recheneinheit. Die Recheneinheit ist eingerichtet zum Ausführen des erfindungsgemäßen Verfahrens.

Das erfindungsgemäße Computerprogrammprodukt ist direkt in einen Speicher einer programmierbaren Recheneinheit ladbar, umfasst Programmcode-Mittel, um ein erfindungsgemäßes Verfahren in der Recheneinheit auszuführen.

Als benachbart angeordnete Bildpunkte werden unmittelbar benachbarte Bildpunkte angesehen. Es werden auch Bildpunkte als benachbart angeordnet angesehen, deren Abstand derart gering ist, dass es möglich ist zwischen den Bildpunkten die Materialeigenschaft zu interpolieren. Insbesondere können die Bildpunkte einen Abstand von 2 cm, besonders bevorzugt von 1 cm voneinander haben.

Das Bestimmen der Materialeigenschaft erfolgt insbesondere basierend auf dem Reflexionsverhalten der Elektrodenschicht bei einer gewählten Wellenlänge. Insbesondere erfolgt das Bestimmen der Materialeigenschaft über eine vorhergehende Kalibrierung der Bildpunkte der Hyperspektralkamera.

Erfindungsgemäß wird also die Materialeigenschaft der Elektrodenschicht basierend auf den Bildern der Hyperspektralkamera analysiert. Der Einsatz der Hyperspektralkamera ermöglicht es vorteilhaft, unterschiedliche Wellenlängen zu analysieren und in einer geeigneten Überlagerung zu nutzen, um ein charakteristisches Bild der Materialeigenschaft zu erstellen. Im Unterschied zur klassischen Bildgebung mit Graustufenbild oder einem Bild mit drei Kanälen, werden die spektrale Unterschiede nicht gemeinschaftlich als eine Farbeigenschaft bewertet, sondern vielmehr tragen die unterschiedlichen Wellenlängen jeweils separat bewertet zu einer Bildsegmentierung und/oder Analyse der Materialeigenschaft bei. Das Verfahren beruht darauf, dass unterschiedliche Materialien in unterschiedlichen Wellenlängen aufgrund ihrer chemischen Zusammensetzung unterschiedliche Eigenschaften zeigen. Vorteilhaft ist es mit dem erfindungsgemäßen Verfahren also möglich, eine Materialeigenschaft zu ermitteln, ohne die Elektrodenschicht zu verändern oder sogar zu zerstören. Vorteilhaft ist es mit dem Einsatz der Hyperspektralkamera auch möglich, die Elektrodenschicht kontinuierlich zu analysieren, und nicht lediglich stichprobenartig. Dies ermöglicht ein deutlich genaueres Analysieren der Elektrodenschicht. Vorteilhaft können die Herstellungsbedingungen im Herstellungsverfahren somit basierend auf exakteren Daten mit einer höheren Genauigkeit verändert werden.

Weiterhin ist es vorteilhaft möglich basierend auf dem Vergleichswert eine charakteristische Eigenschaft zu ermitteln. Als charakteristische Eigenschaft wird insbesondere eine Schichtdicke, ein Materialzusammensetzungsgradient, ein Materialhomogenitätswert und/oder ein Feuchtewert ermittelt. Ebenso können Unregelmäßigkeiten in der Topologie der Elektrodenschicht, insbesondere Risse oder Löcher erfasst werden. Insbesondere ist es so vorteilhaft möglich, Unregelmäßigkeiten, welche während der Produktion entstehen, zu ermitteln.

Die charakteristische Eigenschaft kann insbesondere anhand eines Vergleichs mit Referenzwerten bewertet werden. Überschreitet die charakteristische Eigenschaft Grenzwerte der Referenzwerte, können die Herstellungsbedingungen angepasst werden.

Weiterhin ist es vorteilhaft mittels der Hyperspektralkamera möglich, zeitlich kontinuierlich zu messen. Demnach ist es möglich, eine Veränderung in einer Materialeigenschaft als örtlichen Materialeigenschaftsgradient und/oder als zeitlichen Materialeigenschaftsgradient zu ermitteln. Vorteilhaft ist es demnach möglich Veränderungen bei der Herstellung der Elektrodenschicht frühzeitig zu erkennen.

In einer vorteilhaften Ausgestaltung und Weiterbildung der Erfindung wird für ein Bestimmen einer Materialeigenschaft eine erste KI-Engine verwendet. Das Verfahren wird also computergestützt ausgeführt. Vorteilhaft erfolgt das Auswerten der Bildpunkte der Hyperspektralkamera somit automatisiert. Vorteilhaft ist ein Eingreifen eines Menschen somit nicht mehr nötig. Das ermöglicht das Verarbeiten sehr großer Datenmengen. Weiterhin ist es vorteilhaft möglich eine Auswertung sehr schnell vornehmen zu können.

In einer weiteren vorteilhaften Ausgestaltung und Weiterbildung der Erfindung wird die erste KI-Engine mittels Deep-Learning-Methoden trainiert, die Bildpunkte in Klassen von Materialeigenschaften einzuteilen. Vorteilhaft erfolgt das Auswerten der Bilddaten der Hyperspektralkamera somit automatisiert. Vorteilhaft ist ein Eingreifen eines Menschen somit nicht mehr nötig. Das ermöglicht das Verarbeiten sehr großer Datenmengen. Weiterhin ist es vorteilhaft möglich, eine Auswertung sehr schnell vornehmen zu können.

In einer vorteilhaften Ausgestaltung und Weiterbildung der Erfindung wird die Elektrodenschicht in den Batteriespeicher eingebracht, der Batteriespeicher wird in Betrieb genommen und Betriebsdaten des Batteriespeichers werden ermittelt.

Diese Betriebsdaten werden zum Ermitteln eines Qualitätswerts des Batteriespeichers herangezogen, wobei der Qualitätswert mit der charakteristischen Eigenschaft korreliert wird. Zum Trainieren einer zweiten KI-Engine werden also Elektrodenschichten in einen Batteriespeicher eingebaut und der Batteriespeicher betrieben. Die Betriebsdaten werden dann mit den charakteristischen Eigenschaften korreliert. Anschließend kann dann basierend auf den Betriebsdaten und der charakteristischen Eigenschaft eine Korrelation mit einem Qualitätswert ermittelt werden. Als ein Qualitätswert wird insbesondere ein Alterungsverhalten, eine Kapazität und/oder ein Innenwiderstand des Batteriespeichers verwendet.

Wurde die zweite KI-Engine mit diesen Daten trainiert, so ist es nun möglich schon anhand der charakteristischen Eigenschaft einen Qualitätswert mittels der zweiten KI-Engine zu bestimmen, ohne für diese Batteriezelle eine Inbetriebnahme durchführen zu müssen. Somit kann frühzeitig entschieden werden, ob diese Elektrodenschicht in eine Batteriezelle eingebaut wird bzw. ob diese Elektrodenschicht in der Batteriezelle mit in einen größeren Energiespeicher eingebaut wird. Vorteilhaft wird so der Anteil des Ausschusses durch eine Analyse, welche schon während der Elektrodenschicht-Herstellung stattfindet, erniedrigt. Dies führt vorteilhaft zu einer deutlich erhöhten Effizienz des Herstellungsprozesses.

In einer weiteren vorteilhaften Ausgestaltung und Weiterbildung der Erfindung wird die zweite KI-Engine trainiert, den Qualitätswert in Qualitätsklassen einzuteilen und basierend auf diesen Qualitätsklassen eine Bewertung der charakteristischen Eigenschaft vorzunehmen. Vorteilhaft beschleunigt das Einteilen der Qualitätswerte in Klassen und das Zuordnen der Qualitätswerte zur charakteristischen Eigenschaft den Auswerteprozess und macht diesen robuster. Vorteilhaft kann der Anteil des Ausschusses der Batterieherstellung so zusätzlich verringert werden.

In einer vorteilhaften Ausgestaltung und Weiterbildung der Erfindung erfolgt das Aufnehmen des Bildes der Elektrodenschicht während eines Herstellungsprozesses des Batteriespeichers. Besonders vorteilhaft können die Elektrodenschicht somit nahezu in Echtzeit während der Herstellung analysiert werden. Weiterhin ist das Bewerten der Elektrodenschicht mittels der charakteristischen Eigenschaft sehr schnell und zuverlässig möglich. Somit kann eine Elektrodenschicht vorteilhaft bewertet werden, ohne dass sie zunächst in Betrieb genommen werden muss. Vorteilhaft kann der Ausschuss ganzer Batteriezellen vermindert werden.

In einer weiteren vorteilhaften Ausgestaltung und Weiterbildung der Erfindung wird als Feuchtewert die Lösungsmittelmenge in der Elektrodenschicht ermittelt. Ist der Feuchtewert in der Elektrodenschicht negativ mit dem Qualitätswert korreliert oder verschlechtert sich die charakteristische Eigenschaft außerhalb eines vorgegebenen Grenzbereichs, so kann die Elektrodenschicht-Rohlösung derart angepasst werden, dass die Elektrodenschicht zuverlässig die gewünschten Eigenschaften aufweist.

In einer weiteren vorteilhaften Ausgestaltung und Weiterbildung der Erfindung erfolgt das Anpassen wenigstens einer Herstellungsbedingung auf wenigstens zwei Qualitätswerten in wenigstens zwei unterschiedlichen Qualitätsklassen. In anderen Worten erfolgt das Anpassen erst, wenn die Qualität in zwei Qualitätsaspekten, insbesondere Feuchtewert und Rissbildung, mangelhaft ist. Vorteilhaft wird derart vermieden, dass die Herstellungsbedingungen überproportional angepasst werden und somit. Die Anpassung erfolgt also robuster.

In einer weiteren vorteilhaften Ausgestaltung und Weiterbildung der Erfindung werden als Herstellungsbedingungen Temperaturen, Lösungsmittelanteil in der Elektrodenschicht-Rohlösung und/oder der Durchmischungsgrad der Elektrodenschicht-Rohlösung derart angepasst, dass die charakteristische Eigenschaft und der zum zugeordnete Qualitätswert sich vorteilhaft erhöht. Weiterhin kann die Geschwindigkeit des Auftragens der Elektroden-Rohlösung (Paste) variiert werden. Es kann auch überprüft werden, ob Düsen, welche einen Zulauf der Elektroden-Rohlösung auf ein Substrat gewährleisten, verstopft sind (insbesondere, wenn die Schichtdicke konstant in einer längsverlaufenden Bahn der Elektrodenschicht von einem Sollwert abweicht). Der Durchmischungsgrad wird insbesondere durch die Rührgeschwindigkeit und die Art des Rührwerks verändert. Weiterhin können Maßnahmen gegen eine nicht erwünschte Vibration eines Trägersubstrats der Elektrodenschicht ergriffen werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
Figur 1 eine Herstellungseinheit mit einer Elektrodenschichtherstellungseinrichtung mit einer Hyperspektralkamera und einer Recheneinheit;
Figur 2 eine Elektrodenschichtherstellungseinrichtung und zwei Batteriezellen;
Figur 3 ein Verfahrensschema zur Analyse einer Elektrodenschicht für einen Batteriespeicher.

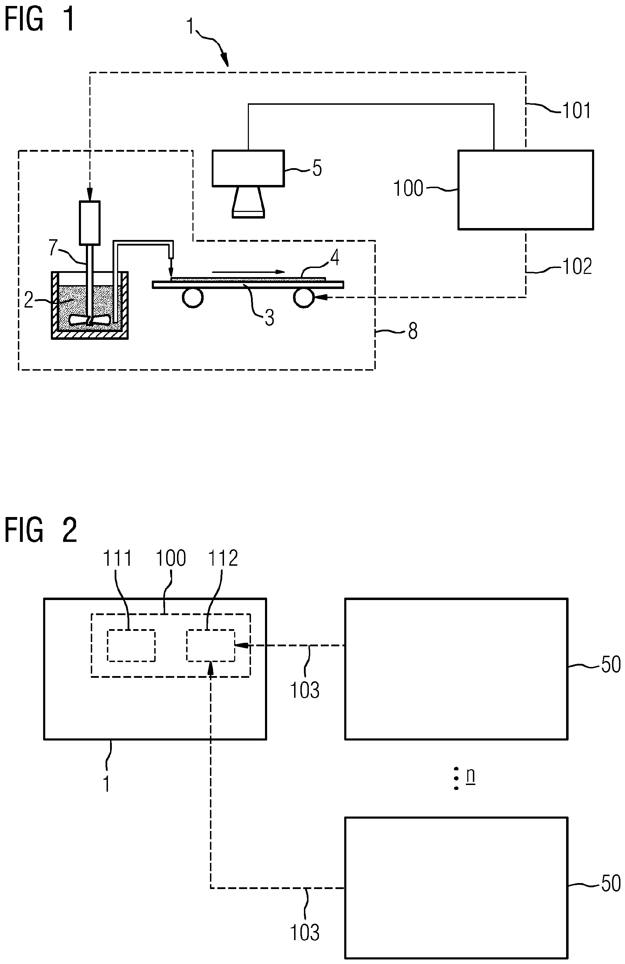

Figur 1 zeigt eine Herstellungseinheit 1. Die Herstellungseinheit 1 umfasst eine Elektrodenschichtherstellungseinrichtung 8, eine Hyperspektralkamera 5 und eine Recheneinheit 100. Die Elektrodenschichtherstellungseinrichtung 8 umfasst ein Trägersubstrat 3 auf das eine Elektrodenschicht 4 aus einer Elektroden-Rohlösung 2 (engl.: Slurry) aufgebracht wird. Die Elektroden Rohlösung 2 wird in einem Behälter mittels eines Rührwerks 7 homogenisiert.

Die Hyperspektralkamera 5 nimmt ein Bild mit wenigstens zwei Bildpunkten der Elektrodenschicht 4 auf. Die beiden Bildpunkte liegen an zueinander benachbarten Orten. Basierend auf den Bildpunkten kann eine Materialeigenschaft der Elektrodenschicht in der Recheneinheit 100 ermittelt werden. In diesem Beispiel erfolgt basierend auf den Bilddaten die Auswertung der Materialzusammensetzung als Materialeigenschaft. Die Materialzusammensetzungen, welche an den beiden benachbarten Orten ermittelt wurden, werden zu einem Vergleichswert zusammengefasst. Dieser Vergleichswert kann insbesondere ein Konzentrationsgradient einer definierten Materialzusammensetzung und/oder ein Konzentrationsgradient einer definierten Komponente der Elektroden-Rohlösung 2 sein. Basierend auf diesem Vergleichswert kann dann eine charakteristische Eigenschaft ermittelt werden. Eine charakteristische Eigenschaft ist in diesem Beispiel ein Materialzusammensetzungsgradient. Basierend auf diese Materialzusammensetzungsgradient kann insbesondere auch einen Materialhomogenitätswert bestimmt werden.

Es ist nun möglich, den Materialzusammensetzungsgradient und oder den Materialhomogenitätswert mit Referenzwerten zu vergleichen. Weichen diese charakteristischen Eigenschaften von einem definierten Grenzwert ab, so kann insbesondere die Geschwindigkeit des Rührwerks 7 und/oder die Laufgeschwindigkeit des Substrates 3 angepasst werden.

Eine alternative Möglichkeit ist es, wie in Figur 2 gezeigt, die Recheneinheit 100 um eine KI-Engine zu erweitern. Diese KI-Engine kann mittels Betriebsdaten aus Batteriespeichern 50, welche Batteriezellen umfassen, in welche die Elektrodenschichten eingebracht wurden, trainiert werden. Basierend auf den Betriebsdaten kann ein Qualitätswert ermittelt werden, wobei die KI-Engine trainiert wird, den Qualitätswert mit der charakteristischen Eigenschaft zu korrelieren.

Somit ist es durch den Einsatz der trainierten KI-Engine möglich, basierend auf der charakteristischen Eigenschaft, welche mittels der Hyperspektralkamera und des aufgenommenen Bildes analysiert wird, einen Qualitätswert zu bestimmen. Basierend auf diesem Qualitätswert können nun, wie bereits in dem ersten Ausführungsbeispiel gezeigt, Herstellungsbedingungen der Herstellungseinheit 1 angepasst werden. In diesem Beispiel wird das Rührwerk 7 der Elektroden-Rohlösung 2 mittels eines zweiten Steuersignals 102 und/oder die Laufgeschwindigkeit des Elektrodensubstrates 3 mittels eines ersten Steuersignals 101 angepasst.

Weiterhin ist es möglich anhand eines Vergleichs der benachbarten Bildaufnahmen Materialzusammensetzungsgradienten und/oder Schichtdicken zu bestimmen. Vorteilhaft kann anhand dieser Auswertung ermittelt werden, wo Defekte, wie insbesondere Risse und/oder Einschlüsse in der Elektrodenschicht vorliegen.

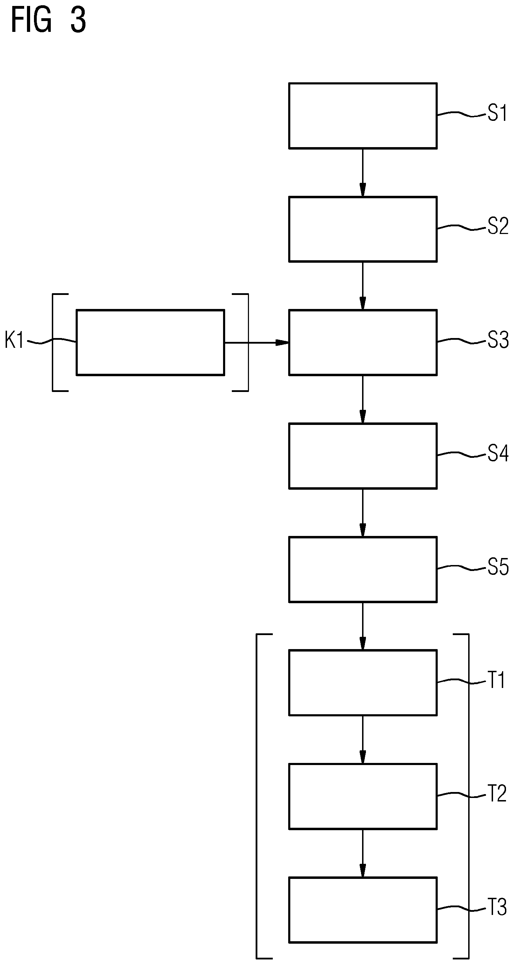

Figur 3 zeigt schematisch das Verfahren zur Analyse einer Elektrodenschicht. Zunächst erfolgt das Bereitstellen einer Hyperspektralkamera in einem ersten Schritt S1. Anschließend wird mittels der Hyperspektralkamera in einem zweiten Schritt S2 ein Bild mit wenigstens zwei Bildpunkten aufgenommen. In einem dritten Schritt S3 werden eine erste Materialeigenschaft an einem ersten Ort und eine zweite Materialeigenschaft einem zweiten Ort bestimmt. In einem vierten Schritt erfolgt das Vergleichen der Materialeigenschaft S 4. Darauf basierend wird ein Vergleichswert ermittelt. Basierend auf dem Vergleichswert wird in einem fünften Schritt S 5 eine charakteristische Eigenschaft der Elektrodenschicht ermittelt.

In einem optionalen weiteren Verfahrensschritt T1 wird die Elektrodenschicht in eine Batteriezelle eingebracht. In einem weiteren Schritt T2 wird die Batteriezelle in Betrieb genommen und Betriebsdaten werden ermittelt. Basierend auf den Betriebsdaten wird ein Qualitätswert der Batteriezelle ermittelt und mit der charakteristischen Eigenschaft, welche mittels der Hyperspektralkamera analysiert wurde, mithilfe einer KI-Engine korreliert. Die Verfahrensschritte T1 bis T3 können also als Trainingsschritte für eine KI-Engine zum Bewerten eines Qualitätswerts angesehen werden.

In einem weiteren optionalen Verfahrens Schritt K1 kann eine weitere KI-Engine trainiert werden, die von der Hyperspektralkamera ermittelten Bildpunkte in Klassen von Materialeigenschaften einzuteilen.

### Bezugszeichenliste

- 1: Herstellungseinheit
- 2: Elektroden-Rohlösung (Slurry)
- 3: Trägersubstrat
- 4: Elektrodenschicht
- 5: Hyperspektralkamera
- 7: Rührwerk
- 8: Elektrodenschichtherstellungseinrichtung
- 50: Batteriespeicher
- 100: Recheneinheit
- 101: erstes Steuersignal
- 102: zweites Steuersignal
- 103: Betriebsdaten
- 111: erste KI-Engine
- 112: zweite KI-Engine
- S1: Bereitstellen einer Hyperspektralkamera
- S2: Aufnehmen eines Bildes mit wenigstens zwei Bildpunkten
- S3: Bestimmen einer ersten Materialeigenschaft und einer zweiten Materialeigenschaft
- S4: Vergleichen der Materialeigenschaften
- S5: Ermitteln einer charakteristischen Eigenschaft der Elektrodenschicht
- T1: Einbringen der Elektrodenschicht in einen Batteriespeicher
- T2: Inbetriebnehmen des Batteriespeichers und Ermitteln von Betriebsdaten
- T3: Ermitteln eines Qualitätswerts und Korrelieren zur charakteristischen Eigenschaft
- K1: Einteilen der Bildpunkte in Klassen von Materialeigenschaft mittels einer ersten KI-Engine

## Patentansprüche

1. Verfahren zur Analyse einer Elektrodenschicht (4) für einen Batteriespeicher (50) in einer Elektrodenschichtherstellungseinrichtung (8) mit folgenden Schritten:
- Bereitstellen einer Hyperspektralkamera (5), welche Bildpunkte aufnimmt,
- Aufnehmen eines Bildes mit wenigstens zwei Bildpunkten der Elektrodenschicht (4), wobei ein erster Bildpunkt einen ersten Ort der Elektrodenschicht (4) und ein zweiter Bildpunkt einen zweiten Ort der Elektrodenschicht (4) abbildet, wobei der erste Ort und der zweite Ort benachbart angeordnet sind,
- Bestimmen einer ersten Materialeigenschaft der Elektrodenschicht (4) an dem ersten Ort basierend auf dem ersten Bildpunkt und Bestimmen einer zweiten Materialeigenschaft der Elektrodenschicht an dem zweiten Ort basierend auf dem zweiten Bildpunkt in einer Recheneinheit (100),
- Vergleichen der Materialeigenschaft an dem ersten Ort und dem zweiten Ort und Ermitteln eines Vergleichswertes,
- Ermitteln charakteristischer Eigenschaften der Elektrodenschicht (4) basierend auf dem Vergleichswert.

2. Verfahren nach Anspruch 1, wobei als eine charakteristische Eigenschaft eine Schichtdicke, ein Materialzusammensetzungsgradient, eine Materialhomogenitätswert und/oder ein Feuchtewert der Elektrodenschicht (4) und/oder Risse in der Elektrodenschicht (4) ermittelt wird.

3. Verfahren nach einem der Ansprüche 1 oder 2, wobei für ein Bestimmen einer Materialeigenschaft eine erste KI - Engine (111) computergestützt verwendet wird.

4. Verfahren nach Anspruch 3, wobei die erste KI - Engine (111) mittels Deep-Learning-Methoden trainiert wird, die Bildpunkte in Klassen von Materialeigenschaften einzuteilen.

5. Verfahren nach einem der vorhergehenden Ansprüche, wobei die Elektrodenschicht (4) in eine Batteriezelle des Batteriespeichers (50) eingebracht wird, der Batteriespeicher (50) in Betrieb genommen wird, Betriebsdaten (103) des Batteriespeichers (50) ermittelt werden, diese Betriebsdaten (103) zum Ermitteln eines Qualitätswerts des Batteriespeichers (50) herangezogen werden, wobei der Qualitätswert mit der charakteristischen Eigenschaft korreliert wird.

6. Verfahren nach Anspruch 5, wobei eine zweite KI-Engine (112) trainiert wird, den Qualitätswert in Qualitätsklassen einzuteilen und basierend auf diesen Qualitätsklassen eine Bewertung der charakteristischen Eigenschaft vorzunehmen.

7. Verfahren nach Anspruch 5 oder 6, wobei als Qualitätswert ein Alterungsverhalten, eine Kapazität und/oder ein Innenwiderstand des Batteriespeichers (50) verwendet wird.

8. Verfahren nach einem der vorhergehenden Ansprüche, wobei das Aufnehmen des Bildes der Elektrodenschicht (4) während eines Herstellungsprozesses des Batteriespeichers (50) erfolgt.

9. Verfahren nach einem der vorhergehenden Ansprüche, wobei als Feuchtewert die Lösungsmittelmenge in der Roh-Paste der Elektrodenschicht ermittelt wird.

10. Herstellungsverfahren eines Batteriespeichers (50) mit folgenden Schritten:
- Analysieren einer Elektrodenschicht (4) für den Batteriespeicher (50) gemäß einem Verfahren nach einem der Ansprüche 1 bis 9,
- Anpassen wenigstens einer Herstellungsbedingung zum Herstellen der Elektrodenschicht (4) basierend auf wenigstens einer charakteristischen Eigenschaft und/oder wenigstens einem Qualitätswert.

11. Herstellungsverfahren nach Anspruch 10, wobei das Anpassen wenigstens einer Herstellungsbedingung zum Herstellen der Elektrodenschicht (4) basierend auf wenigstens zwei charakteristischen Eigenschaften und/oder wenigstens zwei Qualitätswerten beruhend erfolgt.

12. Herstellungsverfahren nach Anspruch 10 oder 11, wobei als Herstellungsbedingungen Temperaturen, Lösungsmittelanteil einer Elektroden-Rohlösung (2), der Durchmischungsgrad der Elektroden-Rohlösung (2) und/oder eine Auftragsgeschwindigkeit der Elektroden-Rohlösung (2) auf ein Trägersubstrat (3) angepasst werden.

13. Herstellungseinheit (1) zum Herstellen eines Batteriespeichers (50) umfassend:
- eine Elektrodenschichtherstellungseinrichtung (8) mit einer Hyperspektralkamera (5) und eine Recheneinheit (100) eingerichtet zum Ausführen des Verfahrens gemäß einem der Ansprüche 1 bis 9.

14. Computerprogrammprodukt, welches direkt in einen Speicher einer programmierbaren Recheneinheit (100) ladbar ist, mit Programmcode-Mitteln, um ein Verfahren nach einem der Ansprüche 1 bis 9 auszuführen, wenn das Computerprogrammprodukt in der Recheneinheit (100) ausgeführt wird.
